# EUROPÄISCHE PATENTANMELDUNG

(11) **EP 1 382 486 A1**
(43) Veröffentlichungstag der Anmeldung: **21.01.2004**
(21) Anmeldenummer: 03016073.3
(22) Anmeldetag: 15.07.2003
(51) Int. Cl.: B60P 3/42, B60J 7/02, B60J 7/06, B60J 7/04, B60R 5/04, B62D 31/00

(54) **Fahrzeug mit veränderbarem Heckaufbau**

(30) Priorität: 20.07.2002 DE 10233029
(71) Anmelder: Webasto Vehicle Systems International GmbH, 82131 Stockdorf (DE)
(72) Erfinder: De Gaillard, Francois, 85390 Mouilleron en Pareds (FR); De Waal, Marting, 1566 TS Assendelft (NL); Guicheteau, Jean-Luc, 49300 Cholet (FR); Kimoto, Izumi, Saeki-gun, 739-0413 Hiroshima-ken (JP); Kölbl, Michael, 82061 Neuried (DE); Leroy, Alain, 86911 Diessen-Dettenschwang (DE); Pollak, Martin, 82178 Puchheim (DE); Righetti, Claudio Ivano, 10139 Torino (IT); Rudolph, Thomas, 82229 Hechendorf (DE); Ueki, Sigeru, 739-2115 Higashihiroshima-City (JP); Vecchioni, Bernhard, Oxford, Michigan 48371 (US)
(74) Vertreter: Bedenbecker, Markus

(57) **Zusammenfassung**

Die Erfindung betrifft ein Fahrzeug, insbesondere Personenkraftwagen (1) mit einem umwandelbaren Heckaufbau (2), wobei der Heckaufbau (2) mindestens ein Dachelement (3), zwei sich gegenüberliegenden Seitenelementen (12, 13) und ein Heckelement (4) umfasst, wobei das Dachelement (3) bei einer Offenstellung des Heckaufbaus (2) im heckseitigen Bodenbereich (21) des Fahrzeuges angeordnet ist.

## Beschreibung

Die Erfindung betrifft ein Fahrzeug mit veränderbarem Heckaufbau, der mindestens ein Dachelement, zwei sich gegenüberliegende Seitenelemente und ein Heckelement umfasst, gemäß dem Oberbegriff des Patentanspruches 1.

Mittels eines umwandelbaren Heckaufbaus kann ein Fahrzeug, insbesondere ein Personenkraftwagen wie ein Kombi oder Geländewagen mit an sich geschlossenem Heck in einen Kraftwagen mit offener Ladefläche, beispielsweise in einen Pick-up, umgebaut werden. Bekannt ist aus der DE 196 16 118 A 1 ein Fahrzeug, bei dem u. a. ein hinteres Dachteil sowie die hinteren Dach- bzw. Karosseriesäulen entfernbar sind. Die Säulen werden dabei durch Verschieben oder Verschwenken in eine am Fahrzeug im wesentlichen nicht sichtbare NichtGebrauchslage überführt. Das entfernbare hintere Dachteil kann zum Beispiel in eine Seitentür abgelegt werden. Ein derartiger Heckaufbau erfordert, dass sich mindestens eine Person zum Transport und zur Ablage des hinteren Dachteils in die Seitentür zur Verfügung stellt.

DE 100 28 777 A1 betrifft ein Fahrzeug mit umwandelbarem Heckaufbau, der aus einem hinteren Dachelement und einem Modul besteht, das beidseitig angeordnete D-Säulen aufweist. In einer Offenstellung des Heckaufbaus ist das Dachelement über dem vorderen Fahrzeugdach angeordnet, wodurch ein erhöhter Windwiderstand des Fahrzeuges erzeugt wird. Desweiteren ist das öffnen des restlichen Fahrzeugdaches aufgrund des im Bereich des vorderen Fahrzeugdaches bei Offenstellung des Heckaufbaus angeordneten Dachelementes nicht möglich.

Demzufolge ist es Aufgabe der vorliegenden Erfindung, ein Fahrzeug mit einem umwandelbaren Heckaufbau zur Verfügung zu stellen, das den Umbau des Heckaufbaus auf einfache und schnelle Weise ohne wesentliche Erhöhung des Windströmungswiderstands des Fahrzeuges bei größtmöglicher offener Fahrzeugdachfläche ermöglicht.

Diese Aufgabe wird gemäß den Merkmalen des Patentanspruches 1 gelöst.

Ein wesentlicher Punkt der Erfindung liegt darin, dass bei einem Fahrzeug, insbesondere Personenkraftwagen mit einem umwandelbaren Heckaufbau, der mindestens ein Dachelement, zwei sich gegenüberliegende Seitenelemente und ein Heckelement umfasst, das Dachelement bei einer Offenstellung des Heckaufbaus im heckseitigen Bodenbereich des Fahrzeuges angeordnet ist. Eine derartige Anordnung des Dachelements wird mittels mit C- und D-Säulen des Fahrzeuges verbundenen Führungsschienen durchgeführt, in welchem das heckseitige Dachelement und weitere zur Fahrzeugvorderseite hin angeordnete Dachelemente übereinander gestapelt in den heckseitigen Bodenbereich des Fahrzeuges abgesenkt werden können. Auf diese Weise ist mindestens ein Dachelement schnell und einfach zu verstauen, ohne dass hierdurch zusätzlich erhöhte Windströmungswiderstände entstehen.

Gemäß einer bevorzugten Ausführungsform kann das Dachelement bei Offenstellung des Heckaufbaues von einem aufklappbaren Bodendeckel abgedeckt werden, so dass bei abgesenktem Dachelement eine geschlossene Bodenfläche, beispielsweise eines Pick-ups, geschaffen werden kann. Auf diese Weise entstehen keine zusätzlichen Behinderungen durch hervorstehende Ränder und Ecken des abgesenkten Dachelements während des Auf- und Abladens von Gütern auf und von der Ladefläche des Pick-ups.

Zusätzlich zu dem absenkbaren Dachelement sind die Seitenelemente und zumindestens Teile der D-Säulen aus der Schließ- in die Offenstellung zur Fahrzeugvorderseite hin entlang der Fahrzeugseite verschiebbar. Zusätzlich kann das Heckelement in der Karosserie, insbesondere einer Heckklappe, abgesenkt werden. Sofern das Heckelement, die Seitenelemente und das Dachelement abgesenkt bzw. in Richtung der Fahrzeugvorderseite ver-schoben sind, besteht eine Offenstellung des Heckaufbaues derart, dass ein Pick-up mit offener Ladefläche vorhanden ist. Ein derartiger Pick-up kann dazu genutzt werden, Ladegegenstände zu transportieren, deren Mitnahme aufgrund ihrer Abmaße bei einem Fahrzeug mit geschlossenem Fahrzeugheck nicht möglich ist.

Sofern der Heckaufbau in einer Schließstellung angeordnet ist, weist der Personenkraftwagen ein geschlossenes Fahrzeugheck auf, wodurch ein Kombi-Personenkraftwagen entsteht.

Gemäß einer bevorzugten Ausführungsform der Erfindung ist zwischen dem durch die Offenstellung des Heckaufbaus erzeugten offenen Laderaum und einem Fahrgastraum im vorderen Fahrzeugbereich eine Laderaumabtrennung, insbesondere eine Trennscheibe angeordnet. Diese Laderaumabtrennung wird vorzugsweise hinter Rücksitzlehnen zwischen einer abgesenkten Stellung und einer angehobenen Trennstellung gegen das Fahrzeugdach verschoben. Ein derartiges Verschieben der Laderaumabtrennung wird vorzugsweise durch mit den Rücksitzlehnen verbundenen Führungsschienen realisiert, die - ebenso wie die Laderaumabtrennung - mit den Rücksitzlehnen umklappbar angeordnet sind.

Gemäß einer Weiterbildung der Erfindung ist eine Sitzeinheit bei Offenstellung des Heckaufbaus mit hochgeklappter Sitzfläche zur Fahrzeugvorderseite hin verschiebbar angeordnet. Auf diese Weise kann bei offenem Heckaufbau eine zusätzliche Sitzreihe verwendet werden. Diese Sitzreihe kann bei geöffnetem Heckaufbau schnell und einfach mittels dafür vorgesehener bodenseitiger Führungsschienen nach vorne verschoben werden, so dass eine größtmögliche Ladefläche des Pick-ups erreicht wird.

Vorzugsweise sind zum Verschieben der Elemente Antriebseinrichtungen vorgesehen, die über eine Betätigungseinrichtung steuerbar sind. Die Betätigungseinrichtung dient zum Einstellen eines Öffnungsvorgangs zum Öffnen des Heckaufbaus, bei dem die Elemente einschließlich Teile der D-Säulen aus einer Schließ- oder Teilöffnungsstellung in die Öffnungsstellung verfahrbar sind. Demzufolge ist ein Aussteigen einer Person zum öffnen oder Schließen des Heckaufbaus nicht mehr notwendig, vorausgesetzt, dass die Betätigungseinrichtung beispielsweise im Armaturenbereich des Fahrzeuges angeordnet ist.

Das Heckelement, eines oder mehrerer der Dachelemente und/oder die Seitenelemente können aus einem transparenten Material bestehen, um fahrzeuginnenseitig einen möglichst hellen Heckbereich bei geschlossenem Heckaufbau zu erreichen.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:

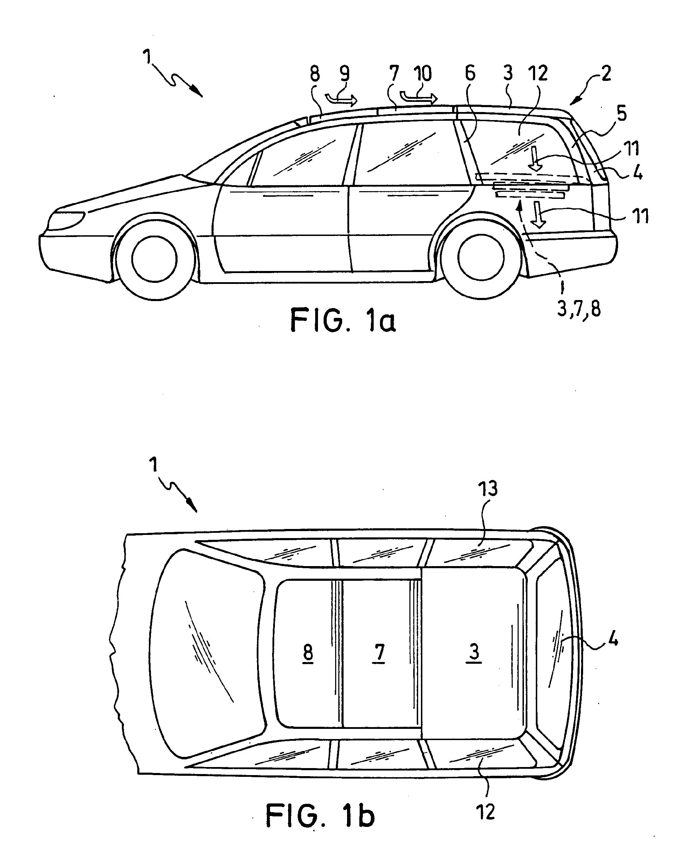

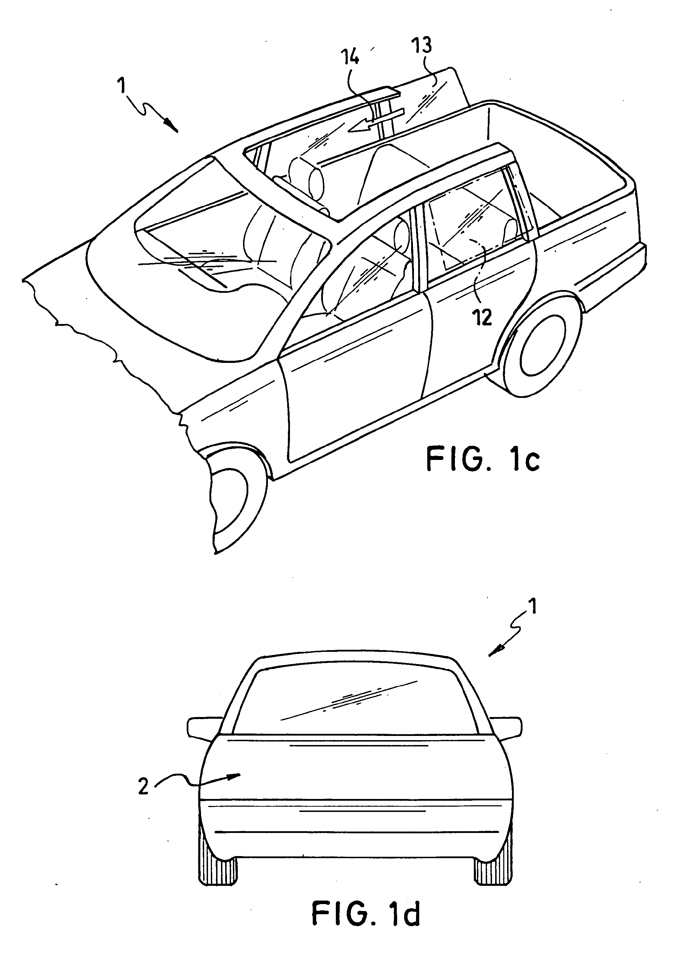

- Fig. 1a: eine schematische Seitenansicht eines Fahrzeugs mit Heckaufbau in Schließstellung gemäß einer Ausführungsform der Erfindung;
- Fig. 1b: eine schematische Draufsicht auf das Fahrzeug gemäß der in Fig. 1a gezeigten Ausführungsform der Erfindung mit dem Heckaufbau in Schließstellung;
- Fig. 1c: eine schematische perspektivische Ansicht des Fahrzeuges gemäß der in den
Fig. 1a und 1b gezeigten Ausführungsform der Erfindung mit dem Heckaufbau in Offenstellung;
- Fig. 1d: eine schematische heckseitige Ansicht des Fahrzeuges gemäß der in den Fig. 1a - 1c gezeigten Ausführungsform der Erfindung mit dem Heckaufbau in Offenstellung;
- Fig. 2a: eine schematische perspektivische Ansicht des Fahrzeuges gemäß einer weiteren Ausführungsform der Erfindung mit einem Heckaufbau in Schließstellung;
- Fig. 2b: eine schematische perspektivische Teilansicht des Fahrzeuges gemäß der in

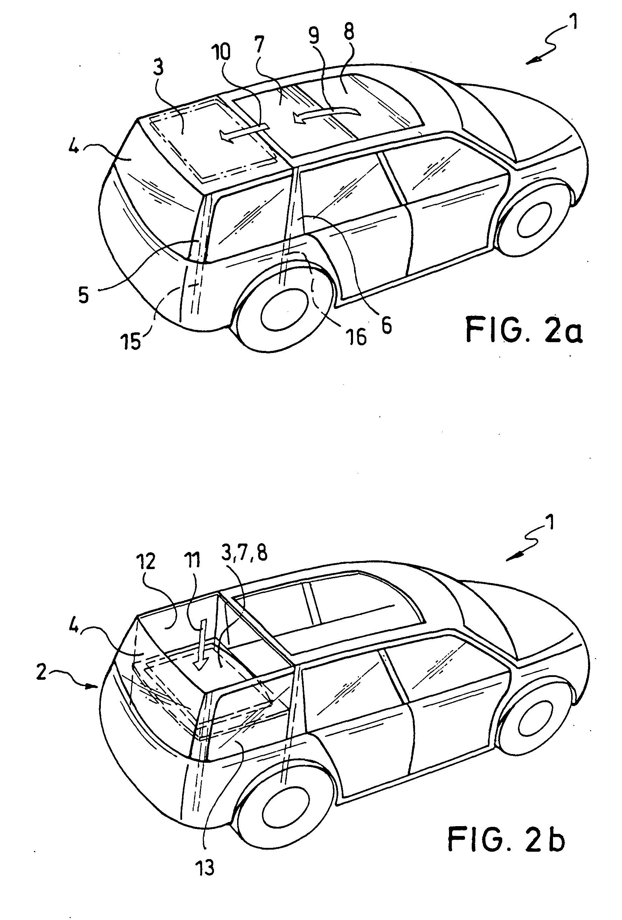

Fig. 2a gezeigten Ausführungsform der Erfindung;

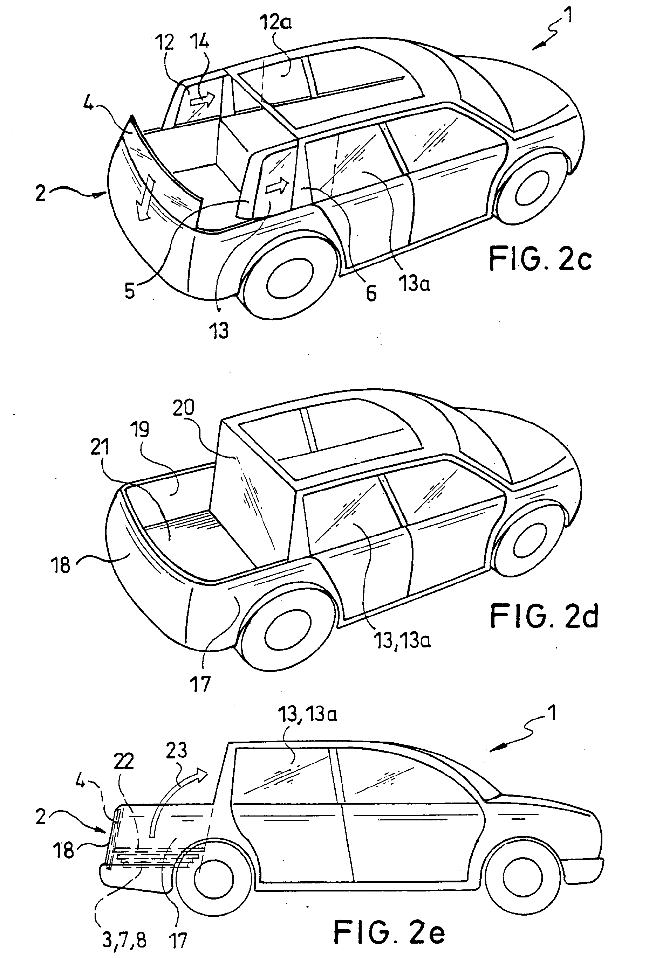

- Fig. 2c: eine schematische perspektivische Ansicht des Fahrzeuges gemäß der in den
Figuren 2a und 2b gezeigten Ausführungsform der Erfindung mit dem Heckaufbau in teilweiser Offenstellung;
- Fig. 2d: eine schematische perspektivische Ansicht des Fahrzeuges gemäß der in Fig. 2a - 2c gezeigten Ausführungsform der Erfindung mit dem Heckaufbau in Offenstellung und
- Fig. 2e: eine schematische perspektivische Ansicht des Fahrzeuges gemäß der in Fig. 2a - 2d gezeigten Ausführungsform der Erfindung mit dem Heckaufbau in Offenstellung.

Das in den Figuren 1a - 1d gezeigte Fahrzeug 1 weist gemäß einer ersten Ausführungsform der Erfindung in seinem Heckbereich einen Heckaufbau 2 auf, der u. a. aus einem Dachelement 3, einem Heckelement 4, D-Säulen 5 und C-Säulen 6 besteht. Um den Heckaufbau 2 von einer hier gezeigten Schließstellung in eine Offenstellung zu bringen, wird das Dachelement 3 und ggf. weitere zur Fahrzeugvorderseite hin angeordnete Dachelemente 7 und 8 - wie durch die Pfeile 9 und 10 andeutungsweise dargestellt - schiebedachartig geöffnet und heckseitig verschoben, um anschließend im Heckbereich des Fahrzeuges übereinander angeordnet zu werden. Eine derartige Übereinanderstapelung der Dachelemente 3, 7 und 8 kann mittels mit den C- und D-Säulen verbundenen Führungsschienen im Heckbereich erreicht werden. Anschließend wird der Stapel abgesenkt, wie es durch die Pfeile 11 ange-deutet wird.

Der Heckaufbau umfasst weiterhin Seitenelemente 12 und 13, wie sie in den Fig. 1a, 1b und 1c gezeigt sind. Derartige Seitenelemente sind vorteilhaft als Seitenfenster ausgebildet. Die Seitenfenster können zur Fahrzeugvorderseite hin entlang der Fahrzeugseiten verschoben werden, wie es durch den Pfeil 14 in Fig. 1c angedeutet wird. Auf diese Weise ist ein schnelles Umwandeln des Heckaufbaus von seiner Schließ- in eine Offenstellung möglich.

In Figur 1d wird eine schematische heckseitige Ansicht des Fahrzeuges gemäß der ersten Ausführungsform der Erfindung mit einem Heckaufbau in Offenstellung gezeigt. Die Offenstellung des Heckaufbaus ermöglicht die Umwandlung eines Kombi-Personenkraftwagens in einen Pick-up, bei dem sowohl die Seitenelemente als auch das Heckelement und das Dachelement einschließlich der D-Säulen verschoben worden sind, um eine offene Ladefläche zu erhalten.

Die in Figur 2a gezeigte zweite Ausführungsform eines erfindungsgemäßen Fahrzeuges mit einem Heckaufbau in Schließstellung zeigt in Verbindung mit der in Figur 2b gezeigten Darstellung das Verschieben und Absenken einzelner Dachelemente 3, 7 und 8, um ein Personenkraftwagen mit vollständig geöffnetem Fahrzeugdach zu erhalten.

Die fahrzeugvorderseitigen Dachelemente 7, 8 werden - wie es durch die Pfeile 9 und 10 angedeutet wird - mittels seitlich angebrachter Führungsschienen heckseitig verschoben und zusammen mit dem heckseitig bereits angeordneten Dachelement 3 als Dachelemente-stapel in einen Bodenbereich des Heckbereichs des Fahrzeuges abgesenkt. Hierfür weisen die D-Säulen 5 und die C-Säulen 6 Führungsschienen 15 und 16 auf, die entweder mit den Säulen verbunden oder integral in diesen angeordnet sind. Die Dachelemente werden mittels dieser Führungsschienen 15, 16 an ihren vier Eckpunkten elektrisch steuerbar in den Bodenbereich des Heckbereichs des Fahrzeuges abgesenkt.

Sobald die Dachelemente 3, 7 und 8 in ihrer Offenstellung angeordnet sind, werden die Seitenelemente 12 und 13, die als Seitenfenster ausgebildet sind, zusammen mit Teilen der D-Säulen in hier nicht dargestellten Führungsschienen zur Fahrzeugvorderseite hin verschoben. Die Endstellung der verschobenen heckseitigen Seitenelemente 12 und 13 wird derart gewählt, dass die Ränder der Seitenfenster 12, 13 im wesentlichen mit den Rändern der weiteren Seitenfenster 12a und 13a, die in einer festen Fahrgastzelle des Fahrzeuges angeordnet sind, abschließen.

Zusätzlich wird das in Fig. 2c gezeigte Heckelement, das vorzugsweise als Heckscheibe ausgebildet ist, in eine darunter angeordnete Heckklappe 18, wie sie in Figur 2d gezeigt wird, abgesenkt.

Die in Figur 2d gezeigte schematische perspektivische Ansicht des Fahrzeuges gemäß der zweiten Ausführungsform der Erfindung zeigt den Heckaufbau in einer Offenstellung. In dieser Stellung weist das Fahrzeug 1 heckseitig eine Ladefläche auf, die im wesentlichen von seitlichen Karosserieteilen 17 und 19 und der rückseitigen Heckklappe 18 begrenzt wird. Zwischen der Ladefläche des Pick-ups und der festen Fahrgastzelle ist eine Trennscheibe 20 angeordnet, die ausfahrbar im Rücksitzlehnenbereich der zweiten Sitzreihe angeordnet ist.

Ein Bodenbereich 21 der Ladefläche besteht im wesentlichen aus einem aufklappbaren Bodendeckel 22, wie er in Figur 2e gezeigt wird. Bei einem Übergang des Heckaufbaus von seiner Schließ- in seine Offenstellung wird der zugeklappte Bodendeckel 22 aufgeklappt, wie es durch den Pfeil 23 angedeutet wird. Weiterhin werden die Dachelemente 3, 7 und 8 mittels der Führungsschienen 15 und 16 in den Bodenbereich 21 abgesenkt, und anschließend wird der Bodendeckel 22 wieder zugeklappt.

An dieser Stelle sei darauf hingewiesen, dass alle oben beschriebenen Teile für sich allein gesehen und in jeder Kombination, insbesondere die in der Zeichnung dargestellten Details als erfindungswesentlich beansprucht werden. Abänderungen hiervon sind dem Fachmann geläufig.

### Bezugszeichenliste

- 1: Fahrzeug
- 2: Heckaufbau
- 3, 7, 8: Dachelemente
- 4: Heckelement
- 5: D-Säule
- 6: C-Säule
- 9, 10, 11: Öffnungsrichtung der Dachelemente
- 12, 13: Seitenelemente
- 14: Öffnungsrichtung der Seitenelemente
- 15, 16: Führungsschienen
- 17, 19: seitliche Ladeflächen, Karosserieteile
- 18: rückwärtige Heckklappe
- 20: Trennscheibe
- 21: Bodenbereich der Ladefläche
- 22: aufklappbarer Bodendeckel
- 23: Klapprichtung des Bodendeckels

## Patentansprüche

1. Fahrzeug, insbesondere Personenkraftwagen (1) mit einem umwandelbaren Heck-aufbau (2), wobei der Heckaufbau (2) mindestens ein Dachelement (3), zwei sich gegenüberliegende Seitenelemente (12, 13) und ein Heckelement (4) umfasst,
**dadurch gekennzeichnet, dass**
das Dachelement (3) bei einer Offenstellung des Heckaufbaus (2) im heckseitigen Bodenbereich (21) des Fahrzeuges angeordnet ist.

2. Fahrzeug nach Anspruch 1,
**dadurch gekennzeichnet, dass**
das Dachelement (3) aus einer Schließstellung, in welcher der Heckaufbau (2) ein geschlossenes Fahrzeugheck bildet, in die Offenstellung mittels Führungsschienen (15, 16) verschiebbar ist.

3. Fahrzeug nach Anspruch 2,
**dadurch gekennzeichnet, dass**
die Führungsschienen (15, 16) mit C- und D-Säulen (5, 6) des Fahrzeuges verbunden sind.

4. Fahrzeug nach einem der vorangegangenen Ansprüche,
**dadurch gekennzeichnet, dass**
die Dachelemente (3) in Offenstellung im Bodenbereich (21) des Fahrzeuges mittels eines aufklappbaren Bodendeckels (22) abgedeckt sind.

5. Fahrzeug nach Anspruch 3,
**dadurch gekennzeichnet, dass**
die Seitenelemente (12, 13) und zumindestens Teile der D-Säulen (5) aus der Schließ- in die Offenstellung zur Fahrzeugvorderseite hin entlang der Fahrzeugseiten verschiebbar sind.

6. Fahrzeug nach Anspruch 5,
**dadurch gekennzeichnet, dass**
die Seitenelemente (12, 13) Seitenfenster umfassen, die in der Offenstellung im wesentlichen parallel zu weiteren an den Fahrzeugseiten angebrachten Seiten-fenstern angeordnet sind.

7. Fahrzeug nach einem der vorangegangenen Ansprüche,
**dadurch gekennzeichnet, dass**
das Heckelement (4) in die Karosserie, insbesondere in eine Heckklappe (18) absenkbar ist.

8. Fahrzeug nach einem der vorangegangenen Ansprüche,
**dadurch gekennzeichnet, dass**
weitere in Schließstellung zur Fahrzeugvorderseite hin angeordnete Dachelemente (7, 8) heckseitig verschiebbar und im Bodenbereich (21) anordenbar sind.

9. Fahrzeug nach einem der vorangegangenen Ansprüche,
**dadurch gekennzeichnet, dass**
zwischen einem durch die Offenstellung des Heckaufbaus (2) erzeugten offenen Laderaum und einem Fahrgastraum eine Laderaumabtrennung, insbesondere eine Trennscheibe (20) angeordnet ist.

10. Fahrzeug nach Anspruch 9,
**dadurch gekennzeichnet, dass**
die Laderaumabtrennung zwischen einer abgesenkten Stellung hinter Rücksitzlehnen und einer angehobenen Trennstellung gegen das Fahrzeugdach verschiebbar ist.

11. Fahrzeug nach Anspruch 10,
**dadurch gekennzeichnet, dass** die Laderaumabtrennung an den Rücksitzlehnen verschiebbar gelagert und mit diesen umklappbar ist.

12. Fahrzeug nach einem der vorangegangenen Ansprüche,
**dadurch gekennzeichnet, dass**
eine Sitzeinheit bei Offenstellung des Heckaufbaus mit hochgeklappter Sitzfläche zur Fahrzeugvorderseite hin verschiebbar ist.

13. Fahrzeug nach einem der vorangegangenen Ansprüche,
**dadurch gekennzeichnet, dass**
zum Verschieben der Elemente (3, 4, 12) und der D-Säulenteile (5) Antriebseinrichtungen vorgesehen sind, die über eine Betätigungseinrichtung steuerbar sind.

14. Fahrzeug nach Anspruch 13,
**dadurch gekennzeichnet, dass**
mittels der Betätigungseinrichtung ein Öffnungsvorgang zum Öffnen des Heckaufbaus einstellbar ist, bei dem die Elemente (3, 4, 12, 13) und die D-Säulenteile (5) aus einer Schließ- oder Teilöffnungsstellung in die Offenstellung fahrbar sind.

15. Fahrzeug nach einem der vorangegangenen Ansprüche,
**dadurch gekennzeichnet, dass**
zumindest eines der Elemente (3, 4, 12, 13) ein transparenter Deckel oder eine transparente Scheibe ist.
